# EUROPEAN PATENT SPECIFICATION

(11) **EP 3 982 241 B1**
(45) Date of publication and mention of the grant of the patent: **02.10.2024**
(21) Application number: 21194724.7
(22) Date of filing: 02.04.2013
(51) Int. Cl.: G06F 3/0488, H04M 1/67, G06F 3/04883

(54) **SCREEN UNLOCKING METHOD AND APPARATUS**
BILDSCHIRMFREIGABEVERFAHREN UND -VORRICHTUNG
PROCÉDÉ ET APPAREIL DE DÉVERROUILLAGE D'ÉCRAN

(30) Priority: 29.11.2012 CN 201210499291
(43) Date of publication of application: 13.04.2022
(62) Divisional of application: 19183647.7
(73) Proprietor: HUAWEI TECHNOLOGIES CO., LTD., Shenzhen, Guangdong 518129, P.R. (CN)
(72) Inventor: WANG, Dedong, Shenzhen, 518129, P.R. (CN)
(74) Representative: Gill Jennings & Every LLP

(56) References cited:
- WO-A2-2012/093784
- US-A1- 2010 162 182

## Description

### TECHNICAL FIELD

The present invention relates to the field of touch control technologies, and in particular, to a screen unlocking method, apparatus, and computer readable storage medium.

### BACKGROUND

A screen locking function is one of the major functions of a touch device. The application of the screen locking function brings about a lot of convenience to the life of users. When the touch device is in an idle or a not-in-use state, a user can lock the screen by using the screen locking function, which can save power consumption to prolong the standby time of the touch device, and prevent unexpected misoperations performed by the user on the touch device due to negligence when the touch device is in the idle or not-in-use state.

After the touch device enters a screen-locked state, the user is generally required to unlock the touch device to set the touch device to a working state. In the prior art, the user generally unlocks the touch device by using a finger or a stylus to slide on the touch display screen of the touch device. Currently, a touch device can generally provide two unlocking manners, which are specifically as follows:
The first manner is shortcut unlocking. After the user unlocks the touch device, the user directly enters a function interface corresponding to the shortcut.

The second manner is password pattern unlocking. After the user inputs a password pattern, the touch device verifies the password pattern input by the user; after the verification succeeds, the touch device is unlocked to enable the user to enter a home screen of the touch device.

The foregoing first unlocking manner enables the user to enter the function interface quickly, but the touch device does not authenticate the user identity, which leads to a defect in system security. The foregoing second unlocking can effectively ensure security, but the user can only enter the home screen of the touch device after the touch device is unlocked, and the user needs to perform a further interaction operation with the touch device to enter a desired function interface. As a result, the operations are complex and the unlocking time is long.

US2010/162182 describes an unlocking method and apparatus for an electronic appliance are disclosed. The unlocking method includes detecting a preset gesture input when an input means is locked. The method includes unlocking the input means in response to the input gesture. The method also includes invoking an application mapped to the input gesture in response to unlocking.

WO2012/093784 describes an information display device and a method.

### SUMMARY

The present invention is defined by the appended claims. Embodiments not falling within the scope of the claims are exemplary and considered useful for understanding the invention. The objective of embodiments of the present invention is to provide a screen unlocking method, apparatus, and computer readable storage medium, which can save the unlocking time of a user, thereby improving user experience while effectively ensuring system security of a touch device.

In a first aspect of the present invention, a screen unlocking method according to claim 1 is provided.

In a second aspect of the present invention, a screen unlocking apparatus according to claim 8 is provided.

In the screen unlocking method, apparatus, and computer readable storage medium provided in the embodiments of the present invention, a screen unlocking interface includes both a password unlocking area and a shortcut unlocking area; and password unlocking and shortcut unlocking are performed by receiving unlocking patterns input by a user in the foregoing two areas respectively. Therefore, through a screen unlocking interface, the user can perform not only password unlocking but also shortcut unlocking, where the password unlocking can effectively ensure the system security of a touch device and the shortcut unlocking enables the user to enter a desired function interface quickly. Therefore, the user performs both password unlocking and shortcut unlocking by interacting with the touch device only once, which effectively shortens the unlocking time of the user. In addition, the operation is convenient, thereby effectively improving user experience.

### BRIEF DESCRIPTION OF DRAWINGS

To illustrate the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a screen unlocking method according to an embodiment of the present invention;
FIG. 2 is an exemplary schematic diagram of a screen unlocking interface in the screen unlocking method illustrated in FIG. 1;
FIG. 3 is another exemplary schematic diagram of a screen unlocking interface in the screen unlocking method illustrated in FIG. 1;
FIG. 4 is another exemplary schematic diagram of a screen unlocking interface in the screen unlocking method illustrated in FIG. 1;
FIG. 5 is another exemplary schematic diagram of a screen unlocking interface in the screen unlocking method illustrated in FIG. 1;
FIG. 6 is another exemplary schematic diagram of a screen unlocking interface in the screen unlocking method illustrated in FIG. 1;
FIG. 7 is another schematic flowchart of a screen unlocking method according to an embodiment of the present invention;
FIG. 8 is a schematic structural diagram of a screen unlocking apparatus according to an embodiment of the present invention;
FIG. 9 is another schematic structural diagram of a screen unlocking apparatus according to an embodiment of the present invention;
FIG. 10 is another schematic structural diagram of a screen unlocking apparatus according to an embodiment of the present invention; and
FIG. 11 is a schematic structural diagram of a touch device according to an embodiment of the present invention.

### DESCRIPTION OF EMBODIMENTS

The following clearly and completely describes the technical solutions in the embodiments of the present invention with reference to the accompanying drawings in the embodiments of the present invention.

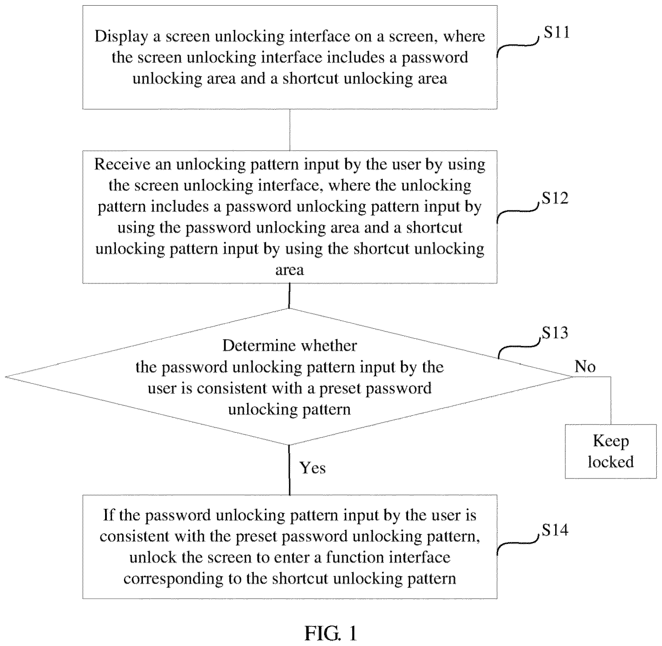

An embodiment provides a screen unlocking method, where the screen unlocking method is executed by a touch device, and specifically by a screen unlocking apparatus disposed in the touch device. As shown in FIG. 1, the screen unlocking method includes the following steps:
S11. Display a screen unlocking interface on a screen, where the screen unlocking interface includes a password unlocking area and a shortcut unlocking area.

Assuming that the touch device is a handset, when the handset is in a dormant state or a standby state, if a power button or a function button used for unlocking is pressed, a screen unlocking interface is displayed on the handset screen.

In this step, the screen unlocking interface provided by the touch device includes a password unlocking area and a shortcut unlocking area. The password unlocking area is used to receive a password unlocking pattern input by a user to perform password unlocking, where the password unlocking refers to that the user inputs, through the password unlocking area, a password pattern (also called password) for unlocking; the touch device verifies whether the password pattern input by the user is consistent with a password pattern which is preset by the user by using the touch device; if the password pattern input by the user is consistent with the preset password pattern, the touch device is unlocked; otherwise, the touch device keeps a screen-locked state. The password unlocking can effectively ensure system security of the touch device. The shortcut unlocking area is used to receive a shortcut unlocking pattern input by the user to perform shortcut unlocking, where the shortcut unlocking refers to that the user selects a shortcut and the touch device activates a function corresponding to the shortcut selected by the user. The shortcut unlocking enables the user to enter a desired function interface quickly.

It should be particularly noted that in the embodiment of the present invention, the screen unlocking interface provided by the touch device includes both a password unlocking area and a shortcut unlocking area. Therefore, the user can perform password unlocking and shortcut unlocking through only one screen unlocking interface, that is, the user can complete the foregoing two types of unlocking by interacting with the touch device only once, instead of interacting with the touch device multiple times, which enables the user to enter a desired function interface quickly, thereby shortening the unlocking time of the user. In addition, the password unlocking effectively ensures system security of the touch device, thereby effectively improving user experience.

For example, on the screen unlocking interface, positional relationships between the password unlocking area and the shortcut unlocking area may include the following three types:
First, on the screen unlocking interface, the password unlocking area may be surrounded by the shortcut unlocking area.

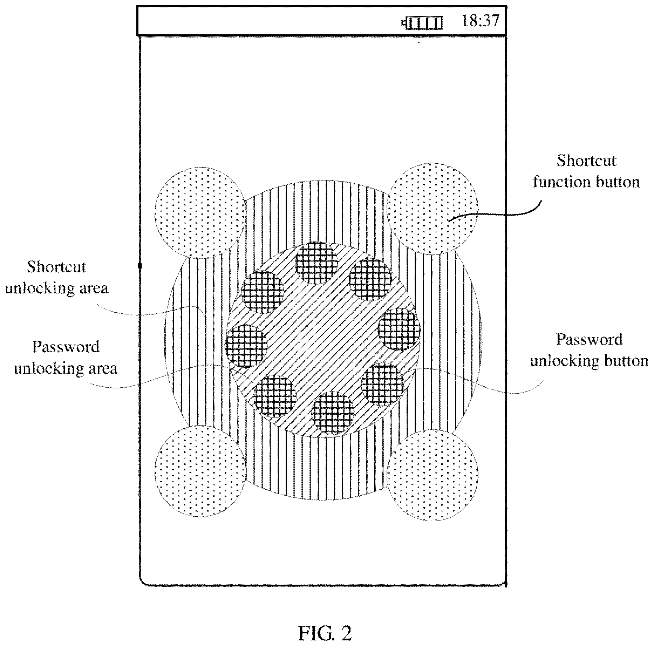

For example, the password unlocking area is located at the center of the screen of the touch device, while the shortcut unlocking area is set around the password unlocking area. For details about this type of positional relationship, reference may be made to a screen unlocking interface illustrated in FIG. 2.

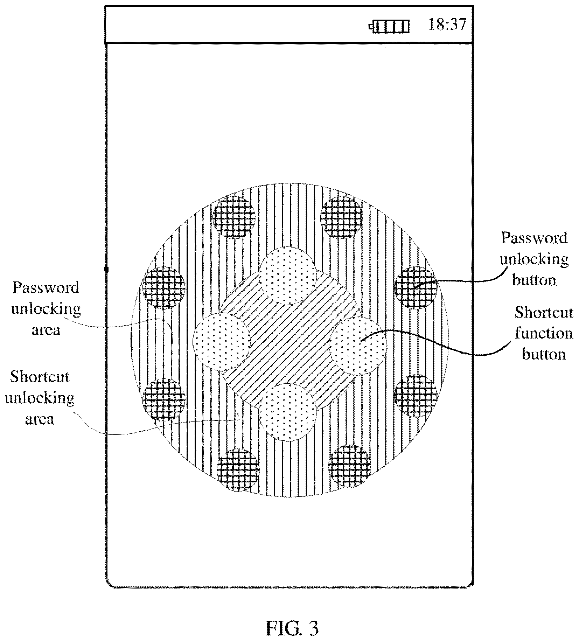

Second, with reference to a screen unlocking interface illustrated in FIG. 3, on the screen unlocking interface, the shortcut unlocking area may be surrounded by the password unlocking area. For example, the shortcut unlocking area is located at the center of the screen of the touch device, while the password unlocking area is set around the shortcut unlocking area.

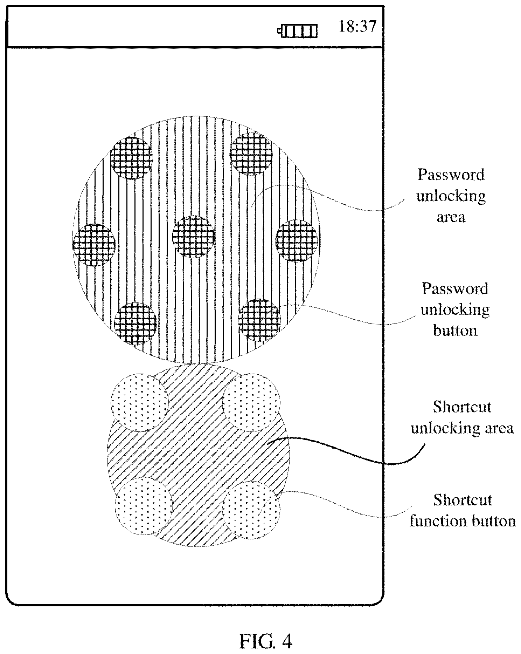

Third, with reference to a screen unlocking interface illustrated in FIG. 4, on the screen unlocking interface, the password unlocking area and the shortcut unlocking area may also be adjacent in a vertical distribution. For example, the shortcut unlocking area is located at a lower part of the screen of the touch device, while the password unlocking area is located above the shortcut unlocking area.

Definitely, the password unlocking area and the shortcut unlocking area may also be adjacent in a horizontal distribution.

It should be noted that, in this distribution manner, of the password unlocking area and the shortcut unlocking area, which area is on the left and which area is on the right, or which area is upper and which area is lower are not limited.

In addition, in this manner, the foregoing two unlocking areas are not limited to an aligned arrangement, and the two areas may be unaligned. For example, the password unlocking area is located at a lower left corner of the screen, while the shortcut unlocking area is located at an upper right corner of the screen.

It should be noted that, in the embodiment, on the screen unlocking interface, the password unlocking area may be distinguished from the shortcut unlocking area by using a color, a frame, or a boundary line. For example, the foregoing two unlocking areas are filled with different colors, the foregoing two unlocking areas are delineated by using their respective frames, and/or a boundary line is set between the foregoing two unlocking areas. How to distinguish the password unlocking area from the shortcut unlocking area on the screen unlocking interface is not limited and may be set by a person skilled in the art freely

It may be understood that, although the screen unlocking interface displayed in this step includes a password unlocking area and a shortcut unlocking area, there may be no obvious difference between the two unlocking areas. As long as a screen unlocking interface includes an area where the user performs password unlocking and an area where the user performs shortcut unlocking, the screen unlocking interface can be considered to include a password unlocking area and a shortcut unlocking area, no matter how these two areas are distributed. For example, on the screen unlocking interface, the password unlocking area and the shortcut unlocking area may be combined into one area, that is, the user can perform password unlocking and shortcut unlocking through one area only, and this area may be considered to be the password unlocking area and the shortcut unlocking area.

Specifically, in the embodiment, on the screen unlocking interface, the shape of the password unlocking area is not limited, and the password unlocking area may be designed into any shape. For example, the password unlocking area may be designed into a circle or a regular or irregular polygon. Similarly, the shape of the shortcut unlocking area is not limited, and the shortcut unlocking area may be designed into any shape. For example, the shortcut unlocking area may be designed into a circle or a regular or irregular polygon.

In an embodiment, for example, reference may be made to the screen unlocking interface illustrated in any one of FIG. 2 to FIG. 4, the password unlocking area may include at least two password unlocking buttons, and a user may input an unlocking password by pressing or sliding over these buttons according to a specific rule. For example, these buttons may be distributed in a ring or be arranged in an array or be arranged at random, where each password unlocking button may be designed into a circle, a quadrilateral, or other regular polygons or irregular polygons, and the password unlocking buttons may be designed into the same shape or different shapes. Optionally, characters such as numbers and letters, or graphics, for example, flower graphics, imitative emotion graphics, and the like, may be set on the password unlocking buttons.

In an embodiment, for example, reference may be made to the screen unlocking interface illustrated in any one of FIG. 2 to FIG. 4, a shortcut function area may include at least two shortcut function buttons; and a user may perform shortcut unlocking by selectively pressing or sliding over a shortcut function button, so that the touch device enters a function interface corresponding to the shortcut function button. For example, these buttons may be distributed in a ring or be arranged in an array or be arranged at random, where each shortcut function button may be designed into a circle, a quadrilateral, or other regular polygons or irregular polygons, and the shortcut function buttons may be designed into the same shape or different shapes. On each shortcut function button, a function description or an icon corresponding to a function is set. For example, the shortcut function area includes four shortcut function buttons, where, function descriptions, namely, "short message", "telephone book", "dialer", and "music player" are set on the four shortcut function buttons, or icons corresponding to the foregoing four functions are disposed respectively on the four shortcut function buttons.

It should be noted that the setting of password unlocking buttons or the setting of shortcut function buttons is not limited. For example, the password unlocking buttons and the shortcut function buttons may be set in, but not limited to, the foregoing distribution manners. In addition, the password unlocking buttons and the shortcut function buttons may be designed into any shape.

To help understanding, the following describes the screen unlocking interface displayed by the touch device in this step by using examples. It may be understood that the following example is used only for the purpose of description and not intended to limit the present invention.

FIG. 2 is an exemplary schematic diagram of the screen unlocking interface displayed by the touch device in this step.

As shown in FIG. 2, in this example, the password unlocking area is surrounded by the shortcut unlocking area; the password unlocking area is designed into a circle, in which eight circular password unlocking buttons are distributed, where the eight circular password unlocking buttons are distributed in a ring; the shortcut unlocking area is distributed on the periphery of the password unlocking area and is concentric with the password unlocking area; four circular shortcut unlocking buttons are distributed in an upper part and a lower part of the shortcut unlocking area, where icons (not illustrated) corresponding to functions, for example, icons corresponding to such functions as "camera", "telephone dialer", "short message", and "music player", are set on the shortcut unlocking buttons.

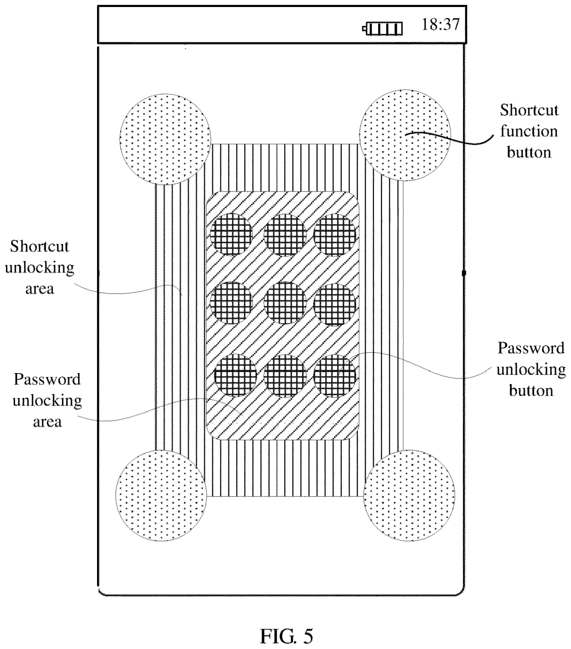

FIG. 5 is another exemplary schematic diagram of the screen unlocking interface displayed by the touch device in this step. As shown in FIG. 5, in this example, the password unlocking area is surrounded by the shortcut unlocking area; the password unlocking area is designed into a rectangle, where nine circular password unlocking buttons are distributed, where the nine password unlocking buttons are distributed in an array; the shortcut unlocking area is distributed on the periphery of the password unlocking area and is also designed into a rectangle; four circular shortcut unlocking buttons are distributed at the upper vertex angles and lower vertex angles of the shortcut unlocking area, where icons (not illustrated) corresponding to functions, for example, icons corresponding to such functions as "camera", "telephone dialer", "short message", and "music player" are set on the four shortcut unlocking buttons.

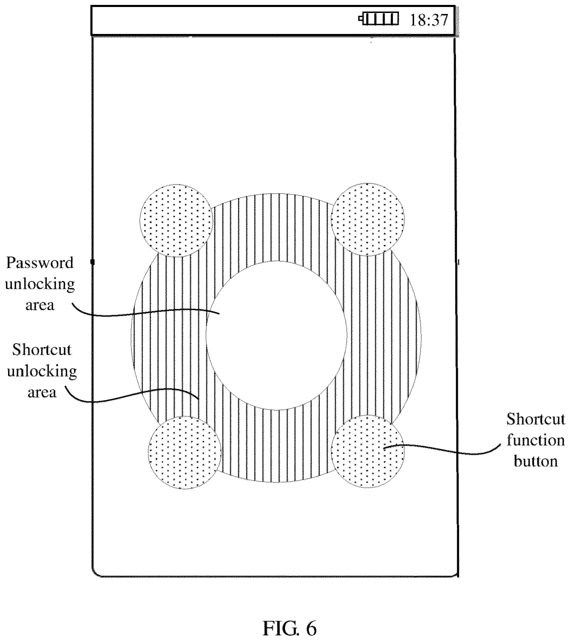

It should be noted that, alternatively, the password unlocking area may include no password unlocking button and is a blank area only. The user may input, through the blank area, a character or a pattern as a password to perform unlocking. For example, in another example of the screen unlocking interface displayed by the touch device in this step, as shown in FIG. 6, the password unlocking area is surrounded by the shortcut unlocking area; the password unlocking area is a circular blank area, and the shortcut unlocking area is concentric with the password unlocking area; four circular shortcut unlocking buttons are distributed in the shortcut unlocking area, where icons (not illustrated) corresponding to functions, for example, icons corresponding to such functions as "camera", "telephone dialer", "short message", and "music player", are set on the shortcut unlocking buttons.

It should be noted that for a small-sized device screen, for example, a handset screen, if the password unlocking area is surrounded by the shortcut unlocking area and the password unlocking area is not large enough, the user will easily slide out of the password unlocking area when inputting an unlocking password, causing inconvenience. In addition, if the password buttons in the password unlocking area are not far enough from the shortcut function buttons, misoperations may also be caused. Therefore, the size of the password unlocking area and the upper limit of the number of password buttons included in the password unlocking area, and the size of the shortcut unlocking area and the upper limit of the number of shortcut function buttons included in the shortcut unlocking area are not limited and a proper adjustment may be made according to the size of the screen of the touch device and user satisfaction.

It can be seen from the above that the password unlocking area on the screen unlocking interface is used to input a password and further authenticate the user identity, and the shortcut unlocking area on the screen unlocking interface is used to perform shortcut unlocking and activate corresponding functions. Pattern password unlocking and shortcut unlocking are performed on one interface, which reduces the waiting time of the user, and increases efficiency, thereby effectively improving user experience.

S12. Receive an unlocking patterns input by the user through the screen unlocking interface, where the unlocking pattern includes a password unlocking pattern input through the password unlocking area and a shortcut unlocking pattern input through the shortcut unlocking area.

After the screen unlocking interface is displayed on the screen of the touch device, the user slides to input a pattern on the unlocking interface by using a finger or a stylus to perform password unlocking and shortcut unlocking.

In this step, the user inputs an unlocking pattern through the screen unlocking interface, where the unlocking pattern refers to all patterns that the user inputs by sliding on the screen unlocking interface when performing screen unlocking. However, it may be understood that the password unlocking needs the input of a password unlocking pattern and the shortcut unlocking needs the input of a shortcut unlocking pattern, while in the embodiment, the foregoing two areas are located on the same screen unlocking interface, and therefore the process where the user performs password unlocking and shortcut unlocking is a successive process performed on one screen unlocking interface, that is, it may be understood that the password pattern input by the user is actually an unlocking pattern that includes the password unlocking pattern and the shortcut unlocking pattern. The password unlocking pattern is a part of the unlocking pattern input by the user and used to perform password unlocking, while the shortcut unlocking pattern is a part of the unlocking pattern input by the user and used to perform shortcut unlocking.

In the embodiment, the sequence of inputting password patterns by the user is not limited. The user may first input the password unlocking pattern in the password unlocking area, and then enter the shortcut unlocking area to input the shortcut unlocking pattern, or the user may first input the shortcut unlocking pattern, and then enter the password unlocking area to input the password unlocking pattern. That is, in this step, the touch device may first receive the password unlocking pattern input by the user in the password unlocking area, and then receive the shortcut unlocking pattern which is input by the user in the shortcut unlocking area after the user inputs the password unlocking pattern in the password unlocking area; or, the touch device may first receive the shortcut unlocking pattern input by the user in the shortcut unlocking area, and then receive the password unlocking pattern which is input by the user in the password unlocking area after the user inputs the shortcut unlocking pattern in the shortcut unlocking area.

It may be understood that when the user performs screen unlocking through an unlocking interface, that is, when the user slides to input an unlocking pattern by using a stylus or a finger, the user generally does not raise the finger or the stylus in this process, but after completing the sliding over one area of the password unlocking area and the shortcut unlocking area, the user slides away from the area, and then enters the other area of the two areas until the whole unlocking pattern is input by sliding, that is, no matter whether the user first inputs the password unlocking pattern or first inputs the shortcut unlocking pattern, the two patterns may be successive and uninterrupted, that is, the password unlocking pattern and the shortcut unlocking pattern received by the touch device may be successive and uninterrupted. It should be noted that, in an embodiment, the password unlocking pattern and the shortcut unlocking pattern input by the user may also be combined into one pattern, that is, the user needs only to input one pattern to perform both password unlocking and shortcut unlocking. For example, the user presses and holds a shortcut button and drags the shortcut button regularly according to a preset password unlocking pattern, so that the user performs both the password unlocking and the shortcut unlocking.

It may be further understood that, in this step, in addition to the password unlocking pattern and the shortcut pattern, the unlocking pattern input by the user may further include other patterns, for example, lines connecting the password unlocking pattern and the shortcut pattern, and other patterns input freely by the user. Therefore, in this step, when receiving the unlocking pattern input by the user, the touch device needs to detect the password unlocking pattern and the shortcut unlocking pattern from the unlocking pattern input by the user.

S13. Determine whether the password unlocking pattern input by the user is consistent with a preset password unlocking pattern.

To effectively ensure system security of the touch device, a main user of the touch device presets a password unlocking pattern in the touch device; if the main user or another user needs to perform screen unlocking to use the touch device, the unlocking succeeds only when the password unlocking pattern input by the main user or the another user is consistent with the password unlocking pattern preset by the main user; and if the password unlocking pattern input by the main user or the another user is inconsistent with the preset password unlocking pattern, the unlocking fails, thereby effectively ensuring the system security.

In this step, specifically, the touch device compares the detected password unlocking pattern with a preset password pattern to determine whether the detected password unlocking pattern is consistent with the preset password pattern. S14. If the password unlocking pattern input by the user is consistent with the preset password unlocking pattern, unlock the screen to enter a function interface corresponding to the shortcut unlocking pattern.

In this step, when the password unlocking pattern input by the user is consistent with the preset password unlocking pattern, the touch device enters a function interface corresponding to the shortcut unlocking pattern input by the user. For example, if the user selects a "dialer" shortcut by using the shortcut unlocking pattern, in this step, when the password unlocking pattern input by the user is consistent with the preset password unlocking pattern, the touch device enters the "dialer" interface.

Alternatively, if the detected password unlocking pattern input by the user is inconsistent with the preset password unlocking pattern, the touch device keeps the locking state unchanged, and may send a password incorrect prompt to the user. The password incorrect prompt includes an icon prompt and/or a sound prompt, for example, a "password incorrect" dialog box displayed on the screen interface, or a "password incorrect" sound prompt.

It should be noted that, if the user only inputs the password unlocking pattern in the password unlocking area but does not enter the shortcut unlocking area to input the shortcut unlocking pattern, that is, the user does not select any shortcut and the touch device detects the password unlocking pattern only, the touch device considers by default that the shortcut unlocking pattern is null. In a case where the shortcut unlocking pattern is null, after confirming the password pattern subsequently, the touch device may directly enter the home screen or enter a default function interface.

In the screen unlocking method of the present invention, a screen unlocking interface is displayed on a screen, where the screen unlocking interface includes a password unlocking area and a shortcut unlocking area; an unlocking pattern input by a user through the screen unlocking interface is received, where the unlocking pattern includes a password unlocking pattern input through the password unlocking area and a shortcut unlocking pattern input through the shortcut unlocking area; then, it is determined whether the password unlocking pattern input by the user is consistent with a preset password unlocking pattern; and if the password unlocking pattern input by the user is consistent with the preset password unlocking pattern, the screen is unlocked to enter a function interface corresponding to the shortcut unlocking pattern. It can be seen from the above that pattern password unlocking and shortcut unlocking can be completed on one interface through one interaction, which not only enhances the security of the touch device but also helps the user to enter a specific function quickly, thereby reducing the waiting time of the user, increasing efficiency, and effectively improving user experience.

To help a person skilled in the part to better understand the technical solution of the screen unlocking method of the present invention, the screen unlocking method is described in the following in detail with reference to specific embodiments.

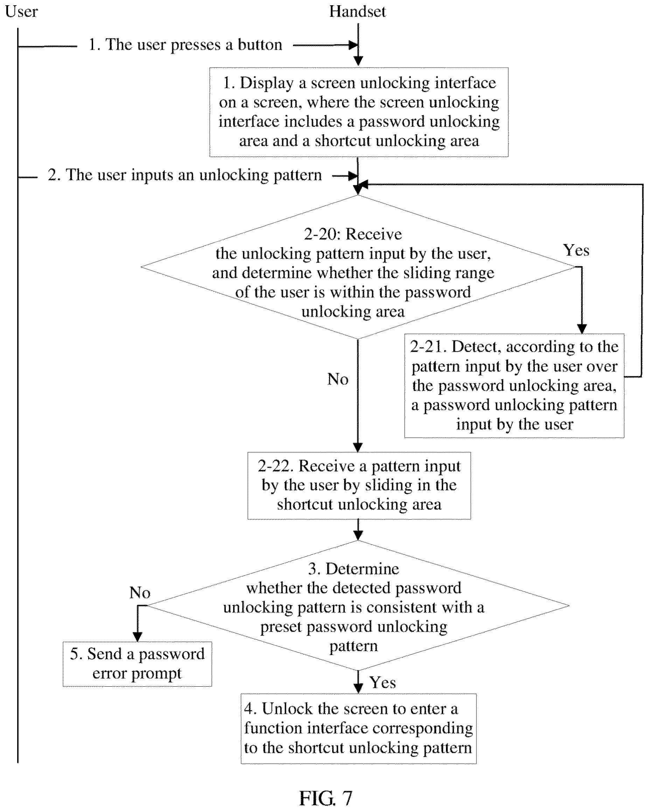

This embodiment assumes that the touch device is a handset. As shown in FIG. 7, a screen unlocking method provided in this embodiment includes the following steps:
1. A user presses a power button of a handset in a locked state, and the handset lightens a touch display screen, and displays a screen unlocking interface on the touch display screen.

Specifically, in this step, the screen unlocking interface is described through the screen unlocking interface illustrated in FIG. 2 as an example; the screen unlocking interface includes a password unlocking area and a shortcut unlocking interface, where the password unlocking area is surrounded by the shortcut unlocking area; the password unlocking area is designed into a circle, in which eight circular password unlocking buttons are distributed, where the eight password unlocking buttons are distributed in a ring; the shortcut unlocking area is distributed on the periphery of the password unlocking area and is concentric with the password unlocking area; four circular shortcut unlocking buttons are distributed at an upper part and a lower part of the shortcut unlocking area, where icons (not illustrated) corresponding to functions, for example, icons corresponding to such functions as "camera", "telephone dialer", "short message", and "music player" are set on the shortcut unlocking buttons.

It may be understood that this embodiment is described only through the screen unlocking interface illustrated in FIG. 2 as an example, but the screen unlocking interface provided in this embodiment is not limited to the screen unlocking interface illustrated in FIG. 2. 2. The user slides on the screen unlocking interface to input an unlocking pattern, and the handset receives the unlocking pattern input by the user.

In this embodiment, the user first inputs a password unlocking pattern in the password unlocking area, and then enters the shortcut unlocking area to input a shortcut unlocking pattern, that is, the handset first receives the password unlocking pattern, and then receives the shortcut unlocking pattern. Definitely, the handset may also first receive the shortcut unlocking pattern, and then receive the password unlocking pattern, which is not further described herein.

In this step, the user begins to slide gestures on the screen unlocking interface to input a password unlocking pattern and a shortcut unlocking pattern successively; when the user slides gestures, the handset receives the unlocking patterns input by the user.

Specifically, in this step of this embodiment, the handset may mainly perform the following detailed steps:
20. The handset receives an unlocking pattern input by the user by sliding in the password unlocking area, and determines whether the sliding range of the user is within the password unlocking area.

If the sliding range of the user is within the password unlocking area, the handset considers that the user slides in the password unlocking area, and step 21 is performed; if the sliding range of the user is beyond the password unlocking area, the handset considers that the user slides away from the password unlocking area, and step 22 is performed.

21. The handset detects, according to the pattern input by the user by sliding in the password unlocking area, the password unlocking pattern input by the user.

22. The handset controls all the password unlocking buttons to become invalid, and stops detection of a password unlocking pattern; and receives a pattern input by the user by sliding in the shortcut unlocking area, and detects, according to the pattern input by the user by sliding in the shortcut unlocking area, whether the user slides to a specific shortcut unlocking button and ends the sliding, that is, detects whether the user completes inputting the shortcut unlocking pattern; if yes, the handset considers that the user selects a function corresponding to the specific shortcut unlocking button, and performs a subsequent password check process; otherwise, the handset continues the detection until it detects that the user slides to a specific shortcut unlocking button and ends the sliding.

3. The handset determines whether the password unlocking pattern detected by the handset is consistent with a preset password unlocking pattern.

If the password unlocking pattern detected by the handset is consistent with the preset password unlocking pattern, step 4 is performed; and if the detected password unlocking pattern input by the user is inconsistent with the preset password unlocking pattern, step 5 is performed.

4. The handset unlocks the screen to enter a function interface corresponding to the detected specific shortcut unlocking button.

5. The handset sends a password incorrect prompt to the user.

In the screen unlocking method provided in this embodiment, a screen unlocking interface includes both a password unlocking area and a shortcut unlocking area; and password unlocking and shortcut unlocking are performed by receiving unlocking patterns input by a user in the foregoing two areas respectively. Therefore, through a screen unlocking interface, the user can perform not only password unlocking but also shortcut unlocking, where the password unlocking can effectively ensure the system security of a touch device and the shortcut unlocking enables the user to enter a desired function interface quickly. Therefore, the user performs both password unlocking and shortcut unlocking by interacting with the touch device only once, which effectively shortens the unlocking time of the user. In addition, the operation is convenient, thereby effectively improving user experience.

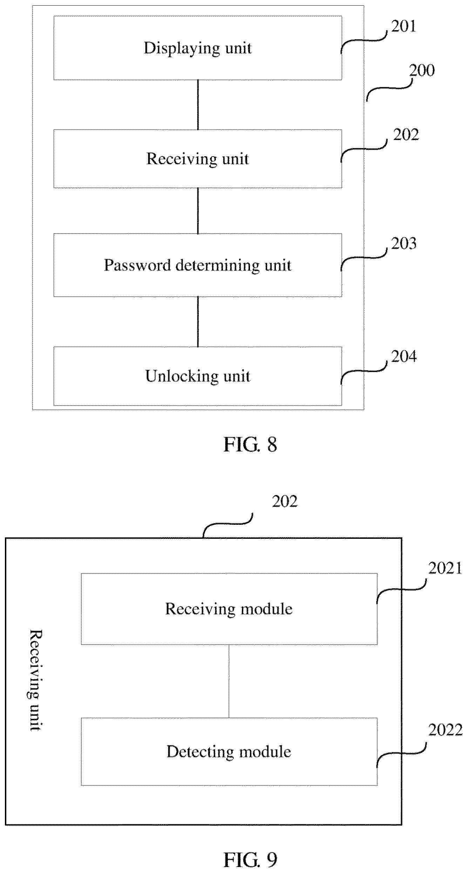

Correspondingly, an embodiment of the present invention further provides a screen unlocking apparatus 200, as shown in FIG. 8, including:
a displaying unit 201, configured to display a screen unlocking interface on a screen, where the screen unlocking interface includes a password unlocking area and a shortcut unlocking area;
a receiving unit 202, configured to receive an unlocking pattern input by a user through the screen unlocking interface displayed by the displaying unit 201, where the unlocking pattern includes a password unlocking pattern input through the password unlocking area and a shortcut unlocking pattern input through the shortcut unlocking area;
a password determining unit 203, configured to determine whether the password unlocking pattern which is input by the user and received by the receiving unit is consistent with a preset password unlocking pattern; and
an unlocking unit 204, configured to: if the password determining unit 203 determines that the password unlocking pattern input by the user is consistent with the preset password unlocking pattern, unlock the screen to enter a function interface corresponding to the shortcut unlocking pattern.

In the screen unlocking apparatus provided in the embodiment of the present invention, the screen unlocking apparatus has a screen unlocking interface, where the screen unlocking interface includes a password unlocking area and a shortcut unlocking area, that is, password unlocking and shortcut unlocking can be completed on one interface, which not only enhances the security of a touch device, but also helps the user to enter a specific function quickly, thereby reducing the waiting time of the user, increasing efficiency, and effectively improving user experience.

Specifically, in an embodiment, on the screen unlocking interface displayed by the displaying unit 201, positional relationships between the password unlocking area and the shortcut unlocking area on the screen unlocking interface may include but not be limited to the following three types:
First, on the screen unlocking interface, the password unlocking area may be surrounded by the shortcut unlocking area. Second, on the screen unlocking interface, the shortcut unlocking area may be surrounded by the password unlocking area.

Third, on the screen unlocking interface, the password unlocking area and the shortcut unlocking area may be adjacent in a vertical distribution. Definitely, the password unlocking area and the shortcut unlocking area may also be adjacent in a horizontal distribution. It should be noted that, in this distribution manner, of the password unlocking area and the shortcut unlocking area, which area is on the left and which area is on the right, or which area is upper and which area is lower are not limited.

In addition, in this manner, the foregoing two unlocking areas are not limited to an aligned arrangement, and the two areas may be unaligned. For example, the password unlocking area is located at a lower left corner of the screen, while the shortcut unlocking area is located at an upper right corner of the screen.

Optionally, in an embodiment, the password unlocking area displayed by the displaying unit 201 may include at least two password unlocking buttons, and the user may input an unlocking password by pressing or sliding over these buttons according to a specific rule.

Specifically, in an embodiment, the shortcut function area displayed by the displaying unit 201 may include at least two shortcut function buttons, and the user may perform shortcut unlocking by selectively pressing or sliding over a shortcut function button, so that the touch device enters a function interface corresponding to the shortcut function button.

It should be noted that the password unlocking area displayed by the displaying unit 201 may include no password unlocking button and is a blank area only. The user may input, through the blank area, a character or a pattern as a password to perform unlocking.

In this way, the password unlocking and the shortcut unlocking are completed on one interface, which not only enhances security but also implements fast unlocking. In addition, the operation is convenient, which effectively improves user experience.

After the screen unlocking interface is displayed on the screen of the touch device, the user slides to input a pattern on the unlocking interface by using a finger or a stylus to perform password unlocking and shortcut unlocking.

In the embodiment, the sequence of inputting password patterns by the user is not limited. The user may first input a password unlocking pattern in the password unlocking area, and then input a shortcut unlocking pattern in the shortcut unlocking area, or the user may first input a shortcut unlocking pattern in the shortcut unlocking area, and then input a password unlocking pattern in the password unlocking area. That is, the receiving unit 202 may first receive the password unlocking pattern input by the user in the password unlocking area, and then receive the shortcut unlocking pattern which is input by the user in the shortcut unlocking area after the user inputs the password unlocking pattern in the password unlocking area; or, the receiving unit 202 may first receive the shortcut unlocking pattern input by the user in the shortcut unlocking area, and then receive the password unlocking pattern which is input by the user in the password unlocking area after the user inputs the shortcut unlocking pattern in the shortcut unlocking area.

In particular, as shown in FIG. 9, the receiving unit 202 specifically includes:
a receiving module 2021, configured to receive an unlocking pattern input by the user by sliding in the password unlocking area; and
a detecting module 2022, configured to detect, according to the unlocking pattern input by the user by sliding in the password unlocking area, a password unlocking pattern input by the user;
where, the receiving module 2021 is further configured to receive an unlocking pattern which is input by the user by sliding in the shortcut unlocking area after the user slides away from the password unlocking area; and
the detecting module 2021 is further configured to detect, according to the unlocking pattern input by the user in the shortcut unlocking area, a shortcut unlocking pattern input by the user.

In this case, the password determining unit 203 is specifically configured to determine whether the password unlocking pattern which is input by the user and detected by the detecting module 2022 is consistent with a preset password unlocking pattern. The unlocking unit 204 is specifically configured to unlock the screen to enter a function interface corresponding to the shortcut unlocking pattern detected by the detecting module 2022.

It may be understood that, when the user performs screen unlocking through an unlocking interface, that is, when the user slides to input an unlocking pattern by using a stylus or a finger, the user generally does not raise the finger or the stylus in this process, but after completing the sliding on one area of the password unlocking area and the shortcut unlocking area, the user slides away from the area, and then enters the other area of the foregoing two areas until the whole unlocking pattern is input by sliding, that is, no matter whether the user first inputs the password unlocking pattern or first inputs the shortcut unlocking pattern, the two patterns may be successive and uninterrupted, that is, in general cases, the password unlocking pattern and the shortcut unlocking pattern received by the receiving module 2021 are successive and uninterrupted.

It may be further understood that, in this step, in addition to the password unlocking pattern and the shortcut pattern, the unlocking pattern input by the user may further include other patterns, for example, lines connecting the password unlocking pattern and the shortcut pattern, and other patterns input freely by the user. Therefore, in this step, when the unlocking pattern input by the user is received, the detecting module 2022 needs to detect the password unlocking pattern and the shortcut unlocking pattern from the unlocking pattern input by the user.

In this way, the password unlocking performed in the password unlocking area and the shortcut unlocking performed in the shortcut unlocking area can be completed by the user on one interface only. The operation is convenient, which reduces the waiting time of the user, increases efficiency, and effectively improves user experience.

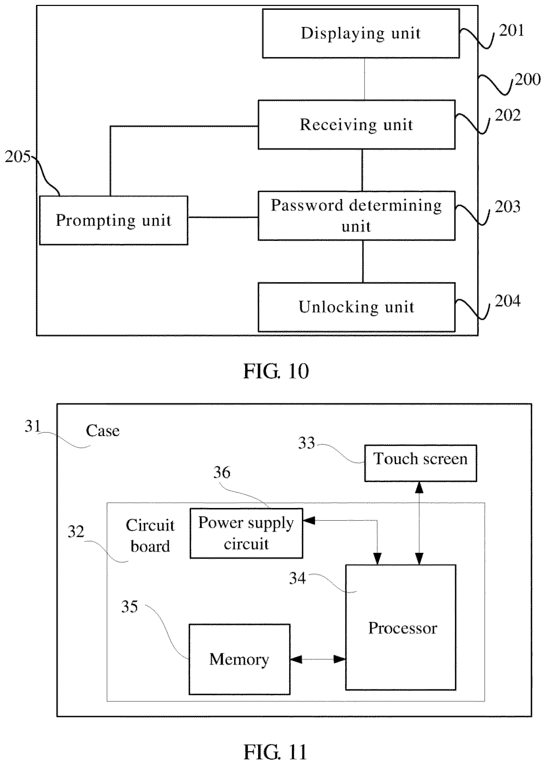

Optionally, in an embodiment, as shown in FIG. 10, the apparatus 200 further includes a prompting unit 205 configured to: if the pattern determining unit 203 determines that the password unlocking pattern input by the user is inconsistent with the preset password unlocking pattern, send a password incorrect prompt to the user.

Correspondingly, an embodiment further provides a touch device. As shown in FIG. 11, the touch device includes a case 31, a circuit board 32, a touch display screen 33, a processor 34, a memory 35, and a power supply circuit 36.

In the touch device:
the touch display screen 33 is arranged on the case 31;
the circuit board 32 is arranged in space enclosed by the case 31;
the processor 34 and the memory 35 are disposed on the circuit board 32;
the memory 35 is configured to store data;
the power supply circuit 36 is configured to supply power to circuits or components of the touch device; and
the processor 34 is configured to process data and is specifically configured to:
   display a screen unlocking interface on the touch display screen 33, where the screen unlocking interface includes a password unlocking area and a shortcut unlocking area;
   receive an unlocking pattern input by a user through the unlocking interface of the touch display screen 33, where the unlocking pattern includes a password unlocking pattern input through the password unlocking area and a shortcut unlocking pattern input through the shortcut unlocking area;
   determine whether the password unlocking pattern input by the user is consistent with a preset password unlocking pattern; and
   if the password unlocking pattern input by the user is consistent with the preset password unlocking
   pattern, unlock the screen to enter a function interface corresponding to the shortcut unlocking pattern.

Optionally, for a division of function executing units in the processor 34, reference may be made to the foregoing embodiment of the screen unlocking apparatus, which is not described herein again.

It may be understood that, in this embodiment, the memory 35 stores a program code corresponding to the functions performed by the processor 34; and when the processor 34 performs the foregoing functions, it reads the program code stored in the memory 35 to perform the functions corresponding to the read program code.

In the touch device provided in the embodiment, a screen unlocking interface includes a password unlocking area and a shortcut unlocking area; after an unlocking pattern input by a user through the screen unlocking interface is received, it is determined whether a password unlocking pattern input by the user is consistent with a preset password unlocking pattern; and if the password unlocking pattern input by the user is consistent with the preset password unlocking pattern, the screen is unlocked to enter a function interface corresponding to a shortcut unlocking pattern. In this way, pattern password unlocking and shortcut unlocking can be completed on one interface, which not only enhances security of the touch device but also helps the user to enter a specific function quickly, thereby reducing the waiting time of the user, increasing efficiency, and effectively improving user experience.

Specifically, in an embodiment, on the screen unlocking interface displayed by the displaying unit 33, positional relationships between the password unlocking area and the shortcut unlocking area on the screen unlocking interface may include but not be limited to the following three types:
First, on the screen unlocking interface, the password unlocking area may be surrounded by the shortcut unlocking area.
Second, on the screen unlocking interface, the shortcut unlocking area may be surrounded by the password unlocking area.
Third, on the screen unlocking interface, the password unlocking area and the shortcut unlocking area may be adjacent in a vertical distribution. Definitely, the password unlocking area and the shortcut unlocking area may also be adjacent in a horizontal distribution. It should be noted that, in this distribution manner, of the password unlocking area and the shortcut unlocking area, which area is on the left and which area is on the right, or which area is upper and which area is lower are not limited.

In addition, in this manner, the foregoing two unlocking areas are not limited to an aligned arrangement, and the two areas may be unaligned. For example, the password unlocking area is located at a lower left corner of the screen, while the shortcut unlocking area is located at an upper right corner of the screen.

Optionally, in an embodiment, the password unlocking area displayed by the touch display screen 33 may include at least two password unlocking buttons, and the user may input an unlocking password by pressing or sliding over these buttons according to a specific rule.

Specifically, in an embodiment, the shortcut function area displayed by the displaying unit 33 may include at least two shortcut function buttons, and the user may perform shortcut unlocking by selectively pressing or sliding over a shortcut function button, so that the touch device enters a function interface corresponding to the shortcut function button.

It should be noted that the password unlocking area displayed by the touch display screen 33 may include no password button and is a blank area only. The user may input, through the blank area, a character or a pattern as a password to perform unlocking.

After the screen unlocking interface is displayed on the screen of the touch device, the user slides to input a pattern on the unlocking interface by using a finger or a stylus to perform password unlocking and shortcut unlocking.

For example, the touch device provided in the embodiment may be any terminal device with a screen locking function, such as a handset, a tablet computer, or a personal digital assistant.

It should be noted that the embodiment is applicable to a touch device with any operating system, for example, a touch device with an operating system such as Android, wp, or ios, and may be implemented by making a modification to any operating system, which is not limited.

It should be noted that the embodiments in this specification are described in a progressive manner. For the same or similar parts in the embodiments, reference may be made to the relevant parts. Each embodiment describes in emphasis what is different from other embodiments. In particular, since the apparatus embodiments are basically similar to the method embodiments, the descriptions of the apparatus embodiments are relatively simple. For details about related content, reference may be made to the descriptions of the method embodiments.

It should be noted that the foregoing apparatus embodiments are merely exemplary. The units that are described as separate parts may be physically separate or not separate. The parts that are displayed as the units may be physical units or not be physical units. That is, the parts may be located in one place or distributed in multiple network units. Some or all of the modules may be selected according to the actual need to achieve the objectives of the technical solutions provided in embodiments.

In addition, in the accompanying drawings of the apparatus embodiments the connection relations between the modules indicate that the modules have communication connections, which may be specifically implemented as one or more communication buses or signal cables. A person of ordinary skill in the art can understand and implement the present invention without creative efforts.

## Claims

1. A touch screen unlocking method, comprising:
displaying (S11) a screen unlocking interface on a touch screen wherein the screen unlocking interface comprises a password unlocking area for authenticating the user identity and a shortcut unlocking area;
**characterized by** receiving (S12) an unlocking pattern input by a user through the screen unlocking interface, wherein the unlocking pattern comprises a password unlocking pattern input through the password unlocking area and a shortcut unlocking pattern input through the shortcut unlocking area; wherein the password unlocking pattern and the shortcut unlocking pattern received by the screen unlocking interface are successive and uninterrupted;
unlocking (S14) the touch screen to enter a function interface corresponding to the shortcut unlocking pattern in response to the password unlocking pattern is consistent with a preset password unlocking pattern.

2. The method according to claim 1, wherein:
the password unlocking area is surrounded by the shortcut unlocking area; or,
the shortcut unlocking area is surrounded by the password unlocking area; or,
the password unlocking area and the shortcut unlocking area are adjacent in a vertical or horizontal distribution.

3. The method according to claim 1, wherein:
the password unlocking area comprises at least two password buttons, wherein the at least two password buttons are distributed in a ring or arranged in an array; and/or
the shortcut unlocking area comprises at least two shortcut function buttons, wherein the at least two shortcut function buttons are distributed in a ring or arranged in an array.

4. The method according to claim 1, wherein the shortcut unlocking area comprises at least two shortcut function buttons, the receiving an unlocking pattern input by a user through the screen unlocking interface comprising:
receiving the shortcut unlocking pattern input through the shortcut unlocking area by sliding over a shortcut function button of the at least two shortcut function buttons;
the method comprising:
performing shortcut unlocking to enter the function interface corresponding to the shortcut function button.

5. The method according to claim 1, wherein when the unlocking pattern is input by using a finger and the finger in the inputting process isn't raised, the password unlocking pattern and the shortcut unlocking pattern received by the touch screen are successive and uninterrupted.

6. The method according to claim 1, wherein the receiving an unlocking pattern input by a user through the screen unlocking interface comprises:
receiving a password unlocking pattern input by the user in the password unlocking area; and
receiving a shortcut unlocking pattern input by the user in the shortcut unlocking area, wherein the shortcut unlocking pattern is input by the user in the shortcut unlocking area after the user inputs the password unlocking pattern in the password unlocking area;
or,
receiving a shortcut unlocking pattern input by the user in the shortcut unlocking area; and
receiving a password unlocking pattern input by the user in the password unlocking area, wherein the password unlocking pattern is input by the user in the password unlocking area after the user inputs the shortcut unlocking pattern in the shortcut unlocking area.

7. The method according to any one of claims 1 to 4, wherein after the determining whether the password unlocking pattern input by the user is consistent with a preset password unlocking pattern, the method further comprises:
sending a password incorrect prompt to the user if the password unlocking pattern input by the user is inconsistent with the preset password unlocking pattern.

8. A screen unlocking apparatus, comprising:
a displaying unit (201), configured to display a screen unlocking interface on a screen, wherein the screen unlocking interface comprises a password unlocking area for authenticating the user identity and a shortcut unlocking area;
**characterized by** a receiving unit (202), configured to receive an unlocking pattern input by a user through the screen unlocking interface displayed by the displaying unit, wherein the unlocking pattern comprises a password unlocking pattern input through the password unlocking area and a shortcut unlocking pattern input through the shortcut unlocking area; wherein the password unlocking pattern and the shortcut unlocking pattern received by the screen unlocking interface are successive and uninterrupted;
an unlocking unit (204), configured to: unlock the screen to enter a function interface corresponding to the shortcut unlocking pattern in response to the password unlocking pattern input by the user is consistent with a preset password unlocking pattern.

9. The apparatus according to claim 8, wherein:
on the screen unlocking interface displayed by the displaying unit:
the password unlocking area is surrounded by the shortcut unlocking area; or,
the shortcut unlocking area is surrounded by the password unlocking area;
or,
the password unlocking area and the shortcut unlocking area are adjacent in a vertical or horizontal distribution.

10. The apparatus according to claim 9, wherein:
on the screen unlocking interface displayed by the displaying unit:
the password unlocking area comprises at least two password buttons, wherein the at least two password buttons are distributed in a ring or arranged in an array;
and/or
the shortcut unlocking area comprises at least two shortcut function buttons, wherein the at least two shortcut function buttons are distributed in a ring or arranged in an array.

11. The apparatus according to claim 9, wherein the shortcut unlocking area comprises at least two shortcut function buttons,
the receiving unit, configured to: receive the shortcut unlocking pattern input through the shortcut unlocking area by sliding over a shortcut function button of the at least two shortcut function buttons;
the unlocking unit, configured to: perform shortcut unlocking to enter the function interface corresponding to the shortcut function button.

12. The apparatus according to claim 9, wherein when the unlocking pattern is input by using a finger and the finger in the inputting process isn't raised, the password unlocking pattern and the shortcut unlocking pattern received by the touch screen are successive and uninterrupted.

13. The apparatus according to claim 9, wherein the receiving unit is specifically configured to:
receive the password unlocking pattern input by the user in the password unlocking area; and
receive the shortcut unlocking pattern input by the user in the shortcut unlocking area, wherein the shortcut unlocking pattern is input by the user in the shortcut unlocking area after the user inputs the password unlocking pattern in the password unlocking area;
or,
receive the shortcut unlocking pattern input by the user in the shortcut unlocking area; and
receive the password unlocking pattern input by the user in the password unlocking area, wherein the password unlocking pattern is input by the user in the password unlocking area after the user inputs the shortcut unlocking pattern in the shortcut unlocking area.

14. A computer-readable storage medium, wherein the computer readable storage medium stores a computer program, and when the computer program is run on a processor, the method according to any one of claim 1 to 7 is carried out.

## Patentansprüche

1. Berührungsbildschirmfreigabeverfahren, das Folgendes umfasst:
Anzeigen (S 11) einer Bildschirmfreigabeoberfläche auf einem Berührungsbildschirm, wobei die Bildschirmfreigabeoberfläche einen Passwortfreigabebereich zum Authentifizieren der Benutzeridentität und einen Verknüpfungsfreigabebereich umfasst,
**gekennzeichnet durch** Empfangen (S12) eines durch einen Benutzer über die Bildschirmfreigabeoberfläche eingegebenen Freigabemusters, wobei das Freigabemuster ein über den Passwortfreigabebereich eingegebenes Passwortfreigabemuster und ein über den Verknüpfungsfreigabebereich eingegebenes Verknüpfungsfreigabemuster umfasst, wobei das Passwortfreigabemuster und das Verknüpfungsfreigabemuster, die durch die Bildschirmfreigabeoberfläche empfangen werden, aufeinanderfolgend und ununterbrochen sind;
Freigeben (S14) des Berührungsbildschirms zum Eintreten in eine dem Verknüpfungsfreigabemuster entsprechende Funktionsoberfläche als Reaktion darauf, dass das Passwortfreigabemuster mit einem voreingestellten Passwortfreigabemuster übereinstimmt.

2. Verfahren nach Anspruch 1, wobei:
der Passwortfreigabebereich von dem Verknüpfungsfreigabebereich umgeben ist; oder
der Verknüpfungsfreigabebereich von dem Passwortfreigabebereich umgeben ist; oder
der Passwortfreigabebereich und der Verknüpfungsfreigabebereich in einer vertikalen oder horizontalen Verteilung benachbart sind.

3. Verfahren nach Anspruch 1, wobei:
der Passwortfreigabebereich mindestens zwei Passwortschaltflächen umfasst, wobei die mindestens zwei Passwortschaltflächen in einem Ring verteilt oder in einem Array angeordnet sind; und/oder
der Verknüpfungsfreigabebereich mindestens zwei Verknüpfungsfunktionsschaltflächen umfasst, wobei die mindestens zwei Verknüpfungsfunktionsschaltflächen in einem Ring verteilt oder in einem Array angeordnet sind.

4. Verfahren nach Anspruch 1, wobei der Verknüpfungsfreigabebereich mindestens zwei Verknüpfungsfunktionsschaltflächen umfasst, wobei das Empfangen eines durch einen Benutzer über die Bildschirmfreigabeoberfläche eingegebenen Freigabemusters Folgendes umfasst:
Empfangen des über den Verknüpfungsfreigabebereich durch Gleiten über eine Verknüpfungsfunktionsschaltfläche der mindestens zwei Verknüpfungsfunktionsschaltflächen eingegebenen Verknüpfungsfreigabemusters;
wobei das Verfahren Folgendes umfasst:
Durchführen einer Verknüpfungsfreigabe zum Eintreten in die der Verknüpfungsfunktionsschaltfläche entsprechenden Funktionsoberfläche.

5. Verfahren nach Anspruch 1, wobei, wenn das Freigabemuster unter Verwendung eines Fingers eingegeben wird und der Finger in dem Eingabeprozess nicht angehoben wird, das Passwortfreigabemuster und das Verknüpfungsfreigabemuster, die durch den Berührungsbildschirm empfangen werden, aufeinanderfolgend und ununterbrochen sind.

6. Verfahren nach Anspruch 1, wobei das Empfangen eines durch einen Benutzer über die Bildschirmfreigabeoberfläche eingegebenen Freigabemusters Folgendes umfasst:
Empfangen eines durch den Benutzer in dem Passwortfreigabebereich eingegebenen Passwortfreigabemusters, und
Empfangen eines durch den Benutzer in dem Verknüpfungsfreigabebereich eingegebenen Verknüpfungsfreigabemusters, wobei das Verknüpfungsfreigabemuster durch den Benutzer in dem Verknüpfungsfreigabebereich eingegeben wird, nachdem der Benutzer das Passwortfreigabemuster in dem Passwort-Freigabebereich eingibt; oder
Empfangen eines durch den Benutzer in dem Verknüpfungsfreigabebereich eingegebenen Verknüpfungsfreigabemusters; und
Empfangen eines durch den Benutzer in dem Passwortfreigabebereich eingegebenen Passwortfreigabemusters, wobei das Passwortfreigabemuster durch den Benutzer in dem Passwortfreigabebereich eingegeben wird, nachdem der Benutzer das Verknüpfungsfreigabemuster in dem Verknüpfungsfreigabebereich eingibt.

7. Verfahren nach einem der Ansprüche 1 bis 4, wobei das Verfahren nach dem Bestimmen, ob das durch den Benutzer eingegebene Passwortfreigabemuster mit einem voreingestellten Passwortfreigabemuster übereinstimmt, ferner Folgendes umfasst:
Senden einer Passwort-Inkorrekt-Meldung an den Benutzer, wenn das durch den Benutzer eingegebene Passwortfreigabemuster nicht mit dem voreingestellten Passwortfreigabemuster übereinstimmt.

8. Bildschirmfreigabevorrichtung, die Folgendes umfasst:
eine Anzeigeeinheit (201), ausgelegt zum Anzeigen einer Bildschirmfreigabeoberfläche auf einem Bildschirm, wobei die Bildschirmfreigabeoberfläche einen Passwortfreigabebereich zum Authentifizieren der Benutzeridentität und einen Verknüpfungsfreigabebereich umfasst,
**gekennzeichnet durch** eine Empfangseinheit (202), ausgelegt zum Empfangen eines durch einen Benutzer über die durch die Anzeigeeinheit angezeigte Bildschirmfreigabeoberfläche eingegebenen Freigabemusters, wobei das Freigabemuster ein über den Passwortfreigabebereich eingegebenes Passwortfreigabemuster und ein über den Verknüpfungsfreigabebereich eingegebenes Verknüpfungsfreigabemuster umfasst, wobei das Passwortfreigabemuster und das Verknüpfungsfreigabemuster, die durch die Bildschirmfreigabeoberfläche empfangen werden, aufeinanderfolgend und ununterbrochen sind;
eine Freigabeeinheit (204), ausgelegt zum: Freigeben des Bildschirms zum Eintreten in eine dem Verknüpfungsfreigabemuster entsprechende Funktionsoberfläche als Reaktion darauf, dass das durch den Benutzer eingegebene Passwortfreigabemuster mit einem voreingestellten Passwortfreigabemuster übereinstimmt.

9. Vorrichtung nach Anspruch 8, wobei:
auf der durch die Anzeigeeinheit angezeigten Bildschirmfreigabeoberfläche:
der Passwortfreigabebereich von dem Verknüpfungsfreigabebereich umgeben ist; oder
der Verknüpfungsfreigabebereich von dem Passwortfreigabebereich umgeben ist; oder
der Passwortfreigabebereich und der Verknüpfungsfreigabebereich in einer vertikalen oder horizontalen Verteilung benachbart sind.

10. Vorrichtung nach Anspruch 9, wobei:
auf der durch die Anzeigeeinheit angezeigten Bildschirmfreigabeoberfläche:
der Passwortfreigabebereich mindestens zwei Passwortschaltflächen umfasst, wobei die mindestens zwei Passwortschaltflächen in einem Ring verteilt oder in einem Array angeordnet sind; und/oder
der Verknüpfungsfreigabebereich mindestens zwei Verknüpfungsfunktionsschaltflächen umfasst, wobei die mindestens zwei Verknüpfungsfunktionsschaltflächen in einem Ring verteilt oder in einem Array angeordnet sind.

11. Vorrichtung nach Anspruch 9, wobei der Verknüpfungsfreigabebereich mindestens zwei Verknüpfungsfunktionsschaltflächen umfasst,
die Empfangseinheit, ausgelegt zum: Empfangen des über den Verknüpfungsfreigabebereich durch Gleiten über eine Verknüpfungsfunktionsschaltfläche der mindestens zwei Verknüpfungsfunktionsschaltflächen eingegebenen Verknüpfungsfreigabemusters;
die Freigabeeinheit, ausgelegt zum: Durchführen einer Verknüpfungsfreigabe zum Eintreten in die der Verknüpfungsfunktionsschaltfläche entsprechenden Funktionsoberfläche.

12. Vorrichtung nach Anspruch 9, wobei, wenn das Freigabemuster unter Verwendung eines Fingers eingegeben wird und der Finger in dem Eingabeprozess nicht angehoben wird, das Passwortfreigabemuster und das Verknüpfungsfreigabemuster, die durch den Berührungsbildschirm empfangen werden, aufeinanderfolgend und ununterbrochen sind.

13. Vorrichtung nach Anspruch 9, wobei die Empfangseinheit insbesondere zu Folgendem ausgelegt ist:
Empfangen des durch den Benutzer in dem Passwortfreigabebereich eingegebenen Passwortfreigabemusters, und
Empfangen des durch den Benutzer in dem Verknüpfungsfreigabebereich eingegebenen Verknüpfungsfreigabemusters, wobei das Verknüpfungsfreigabemuster durch den Benutzer in dem Verknüpfungsfreigabebereich eingegeben wird, nachdem der Benutzer das Passwortfreigabemuster in dem Passwort-Freigabebereich eingibt; oder
Empfangen des durch den Benutzer in dem Verknüpfungsfreigabebereich eingegebenen Verknüpfungsfreigabemusters; und
Empfangen des durch den Benutzer in dem Passwortfreigabebereich eingegebenen Passwortfreigabemusters, wobei das Passwortfreigabemuster durch den Benutzer in dem Passwortfreigabebereich eingegeben wird, nachdem der Benutzer das Verknüpfungsfreigabemuster in dem Verknüpfungsfreigabebereich eingibt.

14. Computerlesbares Speichermedium, wobei das computerlesbare Speichermedium ein Computerprogramm speichert, und wenn das Computerprogramm auf einem Prozessor ausgeführt wird, das Verfahren nach einem der Ansprüche 1 bis 7 ausgeführt wird.

## Revendications

1. Procédé de déverrouillage d'écran tactile, comprenant :
l'affichage (S11) d'une interface de déverrouillage d'écran sur un écran tactile, l'interface de déverrouillage d'écran comprenant une zone de déverrouillage par mot de passe pour l'authentification de l'identité d'utilisateur et une zone de déverrouillage par raccourci ;
**caractérisé par** la réception (S12) d'un modèle de déverrouillage saisi par un utilisateur par le biais de l'interface de déverrouillage d'écran, le modèle de déverrouillage comprenant un modèle de déverrouillage par mot de passe saisi par le biais de la zone de déverrouillage par mot de passe et un modèle de déverrouillage par raccourci saisi par le biais de la zone de déverrouillage par raccourci ; le modèle de déverrouillage par mot de passe et le modèle de déverrouillage par raccourci reçus par l'interface de déverrouillage d'écran étant successifs et ininterrompus ;
le déverrouillage (S14) de l'écran tactile afin d'entrer dans une interface de fonction correspondant au modèle de déverrouillage par raccourci en cas de concordance entre le modèle de déverrouillage par mot de passe et un modèle de déverrouillage par mot de passe prédéfini.

2. Procédé selon la revendication 1,
la zone de déverrouillage par mot de passe étant entourée par la zone de déverrouillage par raccourci ; ou,
la zone de déverrouillage par raccourci étant entourée par la zone de déverrouillage par mot de passe ; ou,
la zone de déverrouillage par mot de passe et la zone de déverrouillage par raccourci étant adjacentes dans une répartition verticale ou horizontale.

3. Procédé selon la revendication 1,
la zone de déverrouillage par mot de passe comprenant au moins deux boutons de mot de passe, les au moins deux boutons de mot de passe étant répartis en anneau ou agencés en tableau ; et/ou
la zone de déverrouillage par raccourci comprenant au moins deux boutons de fonction de raccourci, les au moins deux boutons de fonction de raccourci étant répartis en anneau ou agencés en tableau.

4. Procédé selon la revendication 1, la zone de déverrouillage par raccourci comprenant au moins deux boutons de fonction de raccourci, la réception d'un modèle de déverrouillage saisi par un utilisateur par le biais de l'interface de déverrouillage d'écran comprenant :
la réception du modèle de déverrouillage par raccourci saisi par le biais de la zone de déverrouillage par raccourci par glissement sur un bouton de fonction de raccourci des au moins deux boutons de fonction de raccourci ;
le procédé comprenant :
la réalisation d'un déverrouillage par raccourci afin d'entrer dans l'interface de fonction correspondant au bouton de fonction de raccourci.

5. Procédé selon la revendication 1, lorsque le modèle de déverrouillage est saisi à l'aide d'un doigt et que le doigt dans le processus de saisie n'est pas relevé, le modèle de déverrouillage par mot de passe et le modèle de déverrouillage par raccourci reçus par l'écran tactile étant successifs et ininterrompus.

6. Procédé selon la revendication 1, la réception d'un modèle de déverrouillage saisi par un utilisateur par le biais de l'interface de déverrouillage d'écran comprenant :
la réception d'un modèle de déverrouillage par mot de passe saisi par l'utilisateur dans la zone de déverrouillage par mot de passe ; et
la réception d'un modèle de déverrouillage par raccourci saisi par l'utilisateur dans la zone de déverrouillage par raccourci, le modèle de déverrouillage par raccourci étant saisi par l'utilisateur dans la zone de déverrouillage par raccourci après la saisie, par l'utilisateur, du modèle de déverrouillage par mot de passe dans la zone de déverrouillage par mot de passe ; ou,
la réception d'un modèle de déverrouillage par raccourci saisi par l'utilisateur dans la zone de déverrouillage par raccourci ; et
la réception d'un modèle de déverrouillage par mot de passe saisi par l'utilisateur dans la zone de déverrouillage par mot de passe, le modèle de déverrouillage par mot de passe étant saisi par l'utilisateur dans la zone de déverrouillage par mot de passe après la saisie, par l'utilisateur, du modèle de déverrouillage par raccourci dans la zone de déverrouillage par raccourci.

7. Procédé selon l'une quelconque des revendications 1 à 4, le procédé comprenant en outre, après la détermination s'il y a concordance ou non entre le modèle de déverrouillage par mot de passe saisi par l'utilisateur et un modèle de déverrouillage par mot de passe prédéfini :
l'envoi d'une notification de mot de passe incorrect à l'utilisateur en cas de non-concordance entre le modèle de déverrouillage par mot de passe saisi par l'utilisateur et le modèle de déverrouillage par mot de passe prédéfini.

8. Appareil de déverrouillage d'écran, comprenant :
une unité d'affichage (201), configurée pour afficher une interface de déverrouillage d'écran sur un écran, l'interface de déverrouillage d'écran comprenant une zone de déverrouillage par mot de passe pour l'authentification de l'identité d'utilisateur et une zone de déverrouillage par raccourci ;
**caractérisé par** une unité de réception (202), configurée pour recevoir un modèle de déverrouillage saisi par un utilisateur par le biais de l'interface de déverrouillage d'écran affichée par l'unité d'affichage, le modèle de déverrouillage comprenant un modèle de déverrouillage par mot de passe saisi par le biais de la zone de déverrouillage par mot de passe et un modèle de déverrouillage par raccourci saisi par le biais de la zone de déverrouillage par raccourci ; le modèle de déverrouillage par mot de passe et le modèle de déverrouillage par raccourci reçus par l'interface de déverrouillage d'écran étant successifs et ininterrompus ;
une unité de déverrouillage (204), configurée pour : déverrouiller l'écran afin d'entrer dans une interface de fonction correspondant au modèle de déverrouillage par raccourci en cas de concordance entre le modèle de déverrouillage par mot de passe saisi par l'utilisateur et un modèle de déverrouillage par mot de passe prédéfini.

9. Appareil selon la revendication 8,
sur l'interface de déverrouillage d'écran affichée par l'unité d'affichage :
la zone de déverrouillage par mot de passe étant entourée par la zone de déverrouillage par raccourci ; ou,
la zone de déverrouillage par raccourci étant entourée par la zone de déverrouillage par mot de passe ;
ou,
la zone de déverrouillage par mot de passe et la zone de déverrouillage par raccourci étant adjacentes dans une répartition verticale ou horizontale.

10. Appareil selon la revendication 9,
sur l'interface de déverrouillage d'écran affichée par l'unité d'affichage :
la zone de déverrouillage par mot de passe comprenant au moins deux boutons de mot de passe, les au moins deux boutons de mot de passe étant répartis en anneau ou agencés en tableau ;
et/ou
la zone de déverrouillage par raccourci comprenant au moins deux boutons de fonction de raccourci, les au moins deux boutons de fonction de raccourci étant répartis en anneau ou agencés en tableau.

11. Appareil selon la revendication 9, la zone de déverrouillage par raccourci comprenant au moins deux boutons de fonction de raccourci,
l'unité de réception, configurée pour : recevoir le modèle de déverrouillage par raccourci saisi par le biais de la zone de déverrouillage par raccourci par glissement sur un bouton de fonction de raccourci des au moins deux boutons de fonction de raccourci ;
l'unité de déverrouillage, configurée pour : réaliser un déverrouillage par raccourci afin d'entrer dans l'interface de fonction correspondant au bouton de fonction de raccourci.

12. Appareil selon la revendication 9, lorsque le modèle de déverrouillage est saisi à l'aide d'un doigt et que le doigt dans le processus de saisie n'est pas relevé, le modèle de déverrouillage par mot de passe et le modèle de déverrouillage par raccourci reçus par l'écran tactile étant successifs et ininterrompus.

13. Appareil selon la revendication 9, l'unité de réception étant plus particulièrement configurée pour :
recevoir le modèle de déverrouillage par mot de passe saisi par l'utilisateur dans la zone de déverrouillage par mot de passe ; et
recevoir le modèle de déverrouillage par raccourci saisi par l'utilisateur dans la zone de déverrouillage par raccourci, le modèle de déverrouillage par raccourci étant saisi par l'utilisateur dans la zone de déverrouillage par raccourci après la saisie, par l'utilisateur, du modèle de déverrouillage par mot de passe dans la zone de déverrouillage par mot de passe ;
ou,
recevoir le modèle de déverrouillage par raccourci saisi par l'utilisateur dans la zone de déverrouillage par raccourci ; et
recevoir le modèle de déverrouillage par mot de passe saisi par l'utilisateur dans la zone de déverrouillage par mot de passe, le modèle de déverrouillage par mot de passe étant saisi par l'utilisateur dans la zone de déverrouillage par mot de passe après la saisie, par l'utilisateur, du modèle de déverrouillage par raccourci dans la zone de déverrouillage par raccourci.

14. Support de stockage lisible par ordinateur, le support de stockage lisible par ordinateur stockant un programme d'ordinateur et, lorsque le programme d'ordinateur s'exécute sur un processeur, le procédé selon l'une quelconque des revendications 1 à 7 est mise en oeuvre.
